# FASCICULE DE BREVET EUROPEEN

(11) **EP 2 614 655 B1**
(45) Date de publication et mention de la délivrance du brevet: **29.09.2021**
(21) Numéro de dépôt: 11754922.0
(22) Date de dépôt: 14.07.2011
(51) Int. Cl.: H04N 21/242

(54) **DIFFUSION SYNCHRONISEE DE FLUX**
SYNCHRONISIERTE STREAM-ÜBERTRAGUNG
SYNCHRONISED BROADCAST OF STREAMS

(30) Priorité: 15.07.2010 FR 1002986
(43) Date de publication de la demande: 17.07.2013
(73) Titulaire: Soledge, 34960 Montpellier Cedex 02 (FR)
(72) Inventeur: BINI, Raphael, 34960 Montpellier Cedex 02 (FR)
(86) Numéro de dépôt international: PCT/IB2011/053160
(87) Numéro de publication internationale: WO 2012/007925

(56) Documents cités:
- EP-A1- 1 398 931
- WO-A1-01/50674
- WO-A1-2006/110960
- JP-A- 9 033 674
- US-A1- 2006 013 263
- US-A1- 2007 058 812
- US-A1- 2008 259 966
- US-A1- 2008 291 863
- RIPPS D L: "TIME AND TIME OF DAY", EDN ELECTRICAL DESIGN NEWS, REED BUSINESS INFORMATION, HIGHLANDS RANCH, CO, US, vol. 35, no. 24, 22 novembre 1990 (1990-11-22), pages 197-202, XP000176757, ISSN: 0012-7515
- None

## Description

### DOMAINE

La présente invention entre dans le domaine de la transmission et du traitement synchrone de flux.

L'invention concerne plus particulièrement la diffusion synchronisée à distance de flux de données, cette diffusion synchronisée étant notamment réalisée par plusieurs récepteurs indépendants.

Un des aspects de l'invention est l'utilisation de réseaux de données pour la transmission des flux.

Dans la présente demande, le terme « flux » consiste en un ensemble de données de tout type, particulièrement mais non limitativement, de type audio et/ou vidéo. Le terme « diffusion » regroupe à la fois les traitements réalisés sur des données et leur retranscription sur des diffuseurs, qui peuvent être des transducteurs, transformant les grandeurs variables d'un domaine à un autre (par exemple, des grandeurs électriques vers mécaniques, acoustiques, lumineuses,...).

### ETAT DE L'ART

De manière connue, la diffusion d'un tel flux s'effectue depuis une source d'émission d'un signal vers des récepteurs ayant pour rôle de restituer tout ou partie dudit flux. Outre son rôle d'émetteur, ladite source extrait les données depuis un support, généralement matériel, sur lequel elles sont enregistrées. A titre d'exemple non limitatif, la source peut consister en un lecteur de disque, notamment optique, un terminal informatique ou autre. Le flux ainsi généré est traduit en un signal, spécifique au type de données, afin d'être envoyé vers les récepteurs de manière continue et en temps réel.

Dans la plupart des cas, la transmission s'effectue par un lien filaire, la source étant reliée par un système de câbles auxdits récepteurs. Comme évoqué précédemment, le médium de transmission est dédié aux flux qu'il transporte. Par exemple, une fibre optique assure l'acheminement de données numériques audiovisuelles, tandis qu'un câble coaxial ou dit « blindé » vise particulièrement les données analogiques de bas niveau.

De plus, des protocoles de transmission ont été définis pour l'échange de données numériques, par exemple les protocoles S/PDIF ou AES/EBU pour la transmission de données audionumériques.

Que ce soit pour des données analogiques ou numériques, toute la bande passante disponible est réservée à la transmission des données du flux, et les échanges se font en temps réel.

A ce titre, chaque récepteur restituant le signal ainsi émis est dédié à ce dernier, par exemple un haut-parleur pour un flux audio ou bien des moyens d'affichage pour des données vidéo.

De manière particulière, une unique source peut générer plusieurs signaux simultanément émis sur différents canaux de diffusion vers des récepteurs distincts. C'est le cas lors de la lecture de données audio-vidéo, tel un film. C'est également le cas lors de la diffusion de flux sonores par des diffuseurs indépendants gérant chacun un canal.

On peut citer les brevets suivants qui décrivent des procédés liés à la synchronisation :
[D1] : la demande de brevet Européen EP 1 398 931 A1, au nom de « Sony International (Europe) GmbH », sur « Synchronous play-out of media data packets ».
[D2] : la demande de brevet international WO 2006/110960 A1, au nom de « National ICT Australia Ltd ; Aidan Williams ; Varuni Witana », sur « Method for transporting digital média ».

Le document [D1] décrit un système et une méthode permettant de déterminer l'instant de démarrage du traitement (« lecture ») de paquets de données multimédia.

Le système est basé sur une source de données, capable d'horodater les paquets de données multimédia, et de les envoyer à des récepteurs de données.

Deux méthodes sont décrites :
- Horodatage de l'instant de création des paquets de données, et envoi d'un offset de temps permettant au récepteur de calculer l'instant de lecture désiré des paquets de données
- Horodatage direct avec l'instant de lecture désiré des paquets de données, et donc interprétation immédiate par le récepteur

Le document [D2] décrit un système et une méthode permettant de synchroniser l'envoi et la réception de signaux multimédia par l'intermédiaire de dispositifs connectés à un réseau de données.

Plus précisément, le document [D2] décrit :
- un réseau de données comprenant un dispositif horloge maître et des dispositifs réseaux avec horloge locale ajustable (revendications 1 à 14)
- un dispositif réseau doté d'un port multimédia, d'une horloge maîtresse ou d'un port horloge, et d'un générateur d'horloge locale (revendications 15 à 27)
- une méthode d'opération de dispositifs réseaux (revendications 28 à 40)
- un programme informatique pour implémenter la méthode (revendication 41)

### OBJET DE L'INVENTION

Dans ce cadre, la problématique majeure réside dans la synchronisation des flux émis afin que la restitution de chacun d'entre eux soit simultanée, peu importe le type de récepteur ou les moyens de diffusion.

En particulier, la synchronisation devient essentielle lors de la transmission de flux différents, audio et vidéo, sur des récepteurs distincts (écrans et haut-parleurs). En effet, la synchronisation entre l'image et le son est importante pour la compréhension du message à restituer, gardant une cohérence temporelle et évitant la fatigue du cerveau résultant d'un éventuel décalage entre le visuel et le sonore.

Par ailleurs, les décalages entre différents signaux audio participent à la création de l'image sonore dans l'espace. En effet, la perception psycho-acoustique humaine utilise l'analyse des déphasages entre les signaux sonores perçus par les oreilles droite et gauche. Ces décalages permettent de situer l'origine spatiale d'une onde sonore.

En effet, il existe de faibles écarts de phase entre les deux oreilles pour un même signal perçu, en raison de la différence de longueur de trajet entre chaque oreille et la source sonore. La prise de son stéréophonique a justement pour but de capter les ondes sonores par deux microphones disposés suivant des angles précis, qui seront ensuite restituées par les deux enceintes acoustiques. On recrée ainsi, par la superposition des ondes provenant des diffuseurs, un environnement sonore où les deux oreilles perçoivent les déphasages. Il devient possible de positionner dans l'espace chaque source. Il convient donc de restituer ces écarts afin que le cerveau replace correctement dans l'espace la source virtuelle.

Il faut donc que le système de reproduction sonore n'ajoute pas d'écart de phase supplémentaire aux signaux sonores pour que l'auditeur, placé au centre des enceintes acoustiques, retrouve la position des sources sonores conformément à celle de la prise de son.

Ce problème de synchronisation est peu perceptible dans le cadre de liaisons analogiques, en raison de la vitesse de propagation très élevée du signal au sein des câbles de liaison, qui entraîne un déphasage minime. Les éléments de traitement des données analogiques possèdent des structures électroniques identiques de sorte que le retard du signal est égal ou présente des écarts très faibles entre les récepteurs.

De même, l'utilisation de liaisons numériques dédiées ne pose pas de problème de synchronisation, car elles ont été conçues spécifiquement pour le transport simultané des différents flux. Par exemple, les standards S/PDIF ou AES/EBU permettent la transmission conjointe des données numériques des différents canaux, et ce sur un seul câble.

Ce problème de synchronisation prend une importance toute particulière dans le cadre de transmission de flux audio et/ou vidéo sous formes numérique ou numérique et analogique vers des récepteurs distincts et autonomes, notamment par l'obligation d'utiliser des liaisons distinctes.

La convergence numérique des média et des dispositifs de gestion et de diffusion des flux associés pose la problématique de la transmission et du traitement synchrone des données, en particulier dans le cas où les récepteurs de diffusion sont séparés et indépendants.

C'est notamment le cas d'une liaison entre la source et les récepteurs au travers d'un réseau informatique. Ces derniers envoient les données par paquets multiplexés temporellement, de sorte que chaque récepteur ne reçoit pas les données au même instant. Il n'y a souvent aucune garantie quant à l'instant de réception des données transmises, d'autant plus qu'il peut y avoir de multiples dispositifs connectés au réseau : émetteurs, récepteurs, mais aussi commutateurs, qui induisent des temps de transit très variables.

De plus, chaque récepteur distant étant autonome, il possède au moins une unité de traitement cadencée par au moins une horloge interne locale dont la fréquence peut varier d'un récepteur à un autre, notamment en raison de la tolérance de fabrication des oscillateurs (à quartz ou autre), des variations thermiques, du vieillissement,... Par conséquent, l'instant et la vitesse de diffusion du signal peuvent être différents en fonction des récepteurs, n'assurant pas une restitution cohérente.

Les solutions existantes se basent sur des sauts de fréquences afin d'obtenir, à une valeur de tolérance près, des fréquences similaires entre les récepteurs. Dans la plupart des cas, les horloges locales des récepteurs sont étalonnées par rapport à une horloge globale liée aux moyens de communication choisis, par exemple l'horloge inhérente au système de communication sans fil « Wi-Fi ». Certaines solutions extraient du signal numérique entrant une information de fréquence et se synchronisent dessus, grâce à l'utilisation de techniques de modulation spécifique. Cette méthode d'extraction d'horloge n'est pas applicable sur les réseaux de communication de type informatique, notamment parce que les échanges ne se font pas en mode point à point.

La présente invention se propose de pallier ces inconvénients en proposant une diffusion synchronisée à distance de flux permettant de démarrer la restitution desdits flux au même instant sur plusieurs récepteurs de diffusion distincts, tout en conservant la même vitesse de restitution pour chaque récepteur. En d'autres termes, l'invention se veut à même de coordonner la diffusion des différents récepteurs, à la manière d'un chef d'orchestre et de son premier violon, permettant donc une synchronisation et une syntonisation desdits récepteurs, à savoir réciproquement coordonner dans le temps les actions des récepteurs et accorder les circuits électroniques des récepteurs sur la même fréquence.

### SOLUTION

Pour ce faire, l'invention concerne tout d'abord des procédés de diffusion synchronisée de flux de données, tels que décrits dans les revendications indépendantes 1, 2 et 3.

L'invention a aussi pour objet un système de diffusion synchronisée de flux de données, suivant les descriptions des revendications indépendantes 8, 9 et 10.

Le principe de l'invention réside donc dans la synchronisation des récepteurs entre eux, réalisée indirectement par la synchronisation de chaque récepteur avec la source qui sert alors de référence.

Selon la même invention, la synchronisation des récepteurs peut être réalisée directement entre eux, la source servant uniquement à fournir les données à traiter par les récepteurs. Pour cela, l'horloge d'un des récepteurs prend le rôle d'horloge de référence. Le rôle de la source peut également être réalisé par un des récepteurs, capable à la fois de traiter des données mais aussi de diffuser un flux vers d'autres récepteurs distants.

Ainsi, la présente invention prévoit donc que chaque récepteur possède une horloge électronique interne ajustable en fréquence, cadençant une horloge calendaire dont l'heure peut être modifiée. Ces ajustements et modifications s'effectuent par rapport à une horloge de référence. L'invention prévoit également que tous les éléments de traitement des flux des récepteurs soient cadencés, directement ou indirectement, par leur horloge électronique interne.

D'autres caractéristiques et avantages de l'invention ressortiront de la description détaillée qui va suivre des modes de réalisation non limitatifs de l'invention.

### DESCRIPTION DES FIGURES

La figure n°1 décrit l'architecture d'un système de diffusion distant de flux composé d'une source avec horloge de référence et de trois récepteurs distants de diffusion.
La figure n°2 illustre l'architecture d'un système de diffusion distant de flux composé d'une source et de deux récepteurs distants de diffusion, l'un desdits récepteurs constituant une horloge de référence.
La figure n°3 décrit l'architecture d'un système de diffusion distant de flux composé de deux récepteurs distants de diffusion, l'un desdits récepteurs constituant une horloge de référence et jouant le rôle de source.
La figure n°4 présente les différents résultats de reconstruction d'un signal de forme sinusoïdale réalisées par des récepteurs ayant des horloges calendaires d'heures différentes ou des horloges électroniques de fréquences différentes.

### DESCRIPTION DETAILLEE ET MODES DE RÉALISATIONS

La présente invention concerne donc la diffusion synchronisée de flux.

De manière générale, le procédé et le dispositif selon l'invention prévoient la synchronisation du traitement d'au moins un flux 1 émis depuis au moins une source émettrice 2 vers au moins un récepteur de diffusion 3. Plus particulièrement, un ou plusieurs flux est envoyé depuis au moins une source 2 vers plusieurs récepteurs de diffusion 3.

L'invention consiste donc à synchroniser l'ensemble du système source/récepteurs, plus particulièrement les récepteurs 3 entre eux, par rapport à ladite source 2.

Ladite source 2 comprend des moyens d'émission dudit flux 1, notamment sous forme d'au moins un signal 4. Le flux 1 subit donc une étape de traitement afin d'être converti en signaux 4. Chaque signal 4 est véhiculé vers au moins un récepteur 3 au travers de moyens de liaisons.

Ces derniers peuvent être matériels, tel un lien filaire entre la source et le récepteur, direct ou indirect, par exemple un réseau informatique utilisant un protocole Ethernet ou par courants porteurs en ligne (CPL). Les moyens de liaisons peuvent avantageusement se présenter sous forme de réseau de communication dit « sans fil » 5, à savoir par ondes, infrarouges ou autre. Le type des moyens de liaisons pourra être choisi en fonction du signal 4 émis à transporter et des récepteurs 3. Les moyens de liaisons pourront également être de différents types suivant les récepteurs, voire pour chaque récepteur de différents types pour différents signaux.

Au niveau desdits récepteurs 3, le signal 4 reçu est traité de manière à être diffusé. Cette diffusion dépend encore une fois du type de récepteur 3 et du signal perçu 4. A titre d'exemple non limitatif, un récepteur audio peut être une enceinte acoustique 6 tandis qu'un récepteur vidéo peut consister en des moyens d'affichage 7, notamment de type écran à tube cathodique, dalle à cristaux liquides, projecteur ou analogue.

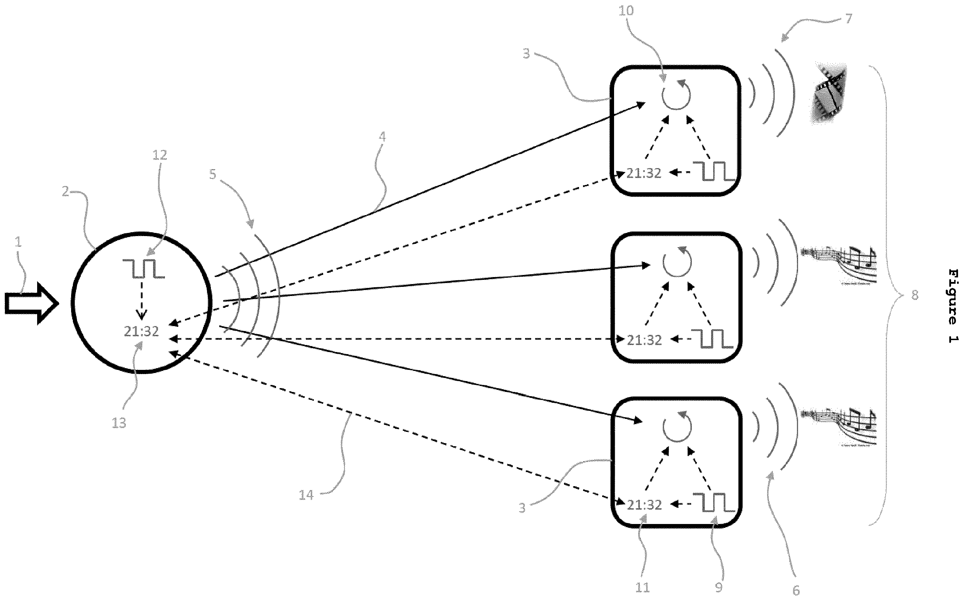

Lors de la diffusion de chaque signal 4 par les récepteurs 3, le flux initial 1 est restitué en tout ou partie. Un tel flux restitué 8 est visible sur la figure 1 annexée et regroupe tout ou partie des diffusions de chaque récepteur 3.

On notera que les opérations de traitement, au niveau de la source 2 ou des récepteurs 3, peuvent être effectuées par des moyens adaptés 10, en particulier un processeur (microcontrôleur, microprocesseur, processeur de traitement de signal) relié à un convertisseur numérique-analogique (CNA) ou à un amplificateur numérique à découpage.

La présente invention se veut à même d'offrir une synchronisation et une syntonisation du traitement du flux 1 entre les différents récepteurs 3, pour une restitution fidèle, corrélée, identique aux données originales.

Pour ce faire, chaque récepteur 3 comprend au moins une horloge électronique interne 9 et des moyens d'ajustement de ladite horloge électronique interne 9 par augmentation ou diminution de sa fréquence d'oscillation. Ladite horloge électronique interne 9 émet un signal qui donne une cadence à destination des dispositifs 10 de traitement des données. Ladite horloge électronique interne 9 se caractérise par sa fréquence.

De plus, chaque récepteur 3 comprend une horloge calendaire 11, dite en « temps réel » qui permet d'avoir une information temporelle au niveau de chaque récepteur 3. Chaque récepteur 3 comprend aussi des moyens d'ajustement de cette information temporelle. Une telle horloge calendaire 11 se caractérise donc par son heure.

Ladite horloge calendaire 11 d'un récepteur 3 est cadencée sur la base de ladite horloge électronique interne 9. Cette horloge calendaire 11 offre un temps local à chaque récepteur 3 avec la possibilité de modifier sa vitesse d'évolution au travers de moyens de variation de la fréquence de ladite horloge électronique interne 9. En d'autres termes, la modification de la cadence de l'horloge électronique interne 9 permet d'intervenir sur l'horloge calendaire 11.

Un avantage de l'invention réside dans l'ajustement en continu des horloges électroniques internes 9 et calendaires 11 des récepteurs 3. En effet, l'ajustement de l'heure locale des récepteurs 3 est réalisé par rattrape du retard ou de l'avance de celle-ci en accélérant ou ralentissant le rythme auquel elle comptabilise le temps qui passe. L'utilisation d'une horloge électronique de fréquence variable 9 dont la période du signal de sortie peut varier sans ajouter de transition supplémentaire permet de comptabiliser le temps de façon monotonique, sans saut de valeur de l'horloge calendaire.

Ladite source 2 comprend une horloge de référence, composée d'une horloge électronique 12 et d'une horloge calendaire 13. Avantageusement, ladite horloge calendaire 13 est cadencée par ladite horloge électronique 12. Ladite horloge de référence permet l'ajustement de ladite horloge électronique interne 9 de chaque récepteur 3. L'horloge calendaire 11 de chaque récepteur 3 peut alors être ajustée, par l'intermédiaire de son horloge électronique interne 9, de manière à obtenir une heure identique à celle de l'horloge de référence de la source 2.

Cet ajustement est réalisé de façon permanente par une estimation régulière des écarts temporels. Il consiste à augmenter ou diminuer la fréquence de son horloge électronique interne 9 de manière à rattraper son avance ou son retard par rapport à l'heure de l'horloge de référence de ladite source 2.

Pour ce faire, depuis ladite source 2 vers ledit récepteur 3, et inversement, sont transmis des signaux horodatés 14 par lesdites horloges calendaires 11 et 13. Dans le sens source-récepteur, chaque signal 14 inclut l'heure de l'horloge de référence, tandis que dans le sens récepteur-source, chaque signal 14 inclut l'heure de l'horloge calendaire locale 11. Ces signaux horodatés 14 sont ensuite comparés par rapport à l'heure de l'horloge calendaire 11 ou 13 où ils parviennent. L'ajustement de l'horloge électronique interne 9 est décidé en conséquence des comparaisons ainsi effectuées.

Dans un premier temps, si l'écart entre l'heure de référence de la source 2 et l'heure locale du récepteur 3 est supérieur à une valeur prédéfinie, alors l'ajustement peut consister en une reprogrammation directe de l'heure de l'horloge calendaire 11.

Ensuite, l'estimation de l'écart issu de ladite comparaison permet de modifier en conséquence le temps local, par accélération ou ralentissement de l'écoulement du temps, grâce à la modification de la fréquence de l'horloge électronique locale 9. Ainsi, lors de la prochaine comparaison, l'écart temporel entre la source 2 et le récepteur 3 aura varié, sans discontinuité, et pourra de nouveau être ajusté.

Avantageusement, pour garantir un temps de synchronisation des horloges calendaires 11 et de syntonisation des horloges électroniques 9 court, ainsi qu'une bonne stabilité dans le temps, il est intéressant d'utiliser un système asservi.

En effet, lorsque l'écart temporel entre source et récepteur est grand, il est intéressant d'ajuster la fréquence de l'horloge électronique 9 dans de larges proportions pour rattraper plus rapidement le retard ou l'avance. Ensuite, au fur et à mesure que cet écart se réduit, il est préférable de réaliser des modifications fréquentielles légères.

On notera que la synchronisation selon l'invention tient compte du temps de transit des signaux 14 entre la source et le récepteur, et inversement. Ce laps de temps est estimé à partir de signaux horodatés 14 effectuant l'aller-retour entre la source 2 et le récepteur 3, ou inversement. Le calcul de la durée de transit est primordial, étant donné que les réglages des horloges électroniques internes 9 des récepteurs 3 s'effectuent sur des délais temporels bien inférieurs à ce temps de transit. Il est également primordial de connaître cette durée de transit pour en tenir compte dans la synchronisation et assurer que l'heure est la même pour chaque horloge calendaire 11.

Un mode de réalisation préférentiel utilise une estimation des écarts temporels basée sur l'exploitation d'un protocole de haut niveau. Avantageusement, il peut s'agir d'un protocole de précision temporelle (PTP), notamment le PTP IEEE 1588.

Les temps de transit étant variables de par la nature du réseau de communication, un procédé de filtrage peut avantageusement être utilisé pour réduire le bruit présent sur les mesures, et obtenir un temps de transit moyen.

Par conséquent, c'est grâce auxdits écarts de temps ainsi qu'à la réduction de ces écarts, au travers de la modification répétée de la fréquence de l'horloge électronique interne 9 de chaque récepteur 3, qu'il est possible de syntoniser ces horloges électroniques internes 9 avec l'horloge de référence 12 de ladite source 2, ou de maintenir un rapport constant entre les fréquences des horloges électroniques internes 9 et la fréquence de l'horloge de référence de ladite source 2.

En pratique, l'horloge calendaire 11 de chaque récepteur 3 évolue plus ou moins vite par rapport à l'horloge de référence 13 de la source 2.

Cette synchronisation assure que chaque récepteur 3 possède une heure identique à celle de la source 2. Le maintien en continu dans le temps de cette identité temporelle engendre forcément des fréquences d'horloge électronique 9 et 12 identiques ou de ratio constant, entre la source 2 et les récepteurs 3. De ce fait, la source 2 et les récepteurs 3 sont syntonisés entre eux.

Selon une autre caractéristique, l'invention garantit un traitement des données au même instant. En d'autres termes, le traitement au niveau de chaque récepteur 3 est assuré de manière simultanée.

Pour ce faire, d'une part, les horloges qui cadencent les éléments 10 de la chaîne de traitement au niveau de chaque récepteur 3 découlent de la même horloge variable locale 9, garantissant que les traitements des données reçues sont effectués en phase par tous lesdits éléments 10. Par exemple, les horloges électroniques qui cadencent les divers éléments de la chaîne de traitement peuvent être générées à partir de l'horloge électronique principale de fréquence variable 9 par l'intermédiaire de compteurs, diviseurs, boucles à verrouillage de phase, ou tout autre élément permettant de conserver un rapport constant entre chacune des fréquences de ces horloges électroniques. Leur fréquence évolue donc suivant le même ratio que celui de l'horloge électronique interne 9.

Ainsi, l'élément final de traitement d'un récepteur 3 est synchronisé avec la source 2 et donc avec les autres récepteurs 3. A titre d'exemple, l'élément qui permet l'estimation des écarts et commande les modifications de fréquence de l'horloge électronique interne 9 travaille en synchronisme avec l'élément 10 qui traite les données, telle la transformation par un convertisseur numérique-analogique des données traitées pour le transducteur final. Ainsi, les convertisseurs numérique-analogique de tous les récepteurs 3 travaillent en synchronie et syntonie. De plus, les données transitent dans toutes les chaînes de traitement sans engorgement ou manque dû à des différences de vitesse de travail.

D'autre part, l'invention inclut un estampillage des données. Cette procédure permet de marquer les données contenues dans le ou les flux et, lors du traitement local au niveau de chaque récepteur 3, de s'assurer que les données possédant la même estampille sont traitées au même instant.

L'estampillage consiste donc à marquer temporellement les données de manière régulière, systématiquement ou périodiquement. Le flux 1 de données est alors divisé en signaux 4 émis par la source 2 et reçus par les récepteurs 3. Ces derniers lisent la marque ainsi apposée sur les données et effectue un traitement en conséquence, notamment en fonction de l'heure de l'horloge calendaire 11, identique à celle de l'horloge de référence de la source 2.

Dans le cas de figure d'un système stéréo, le flux 1 peut être divisé en deux signaux 4 (droit et gauche) qui sont chacun estampillés en même temps puis transmis vers leur récepteur 3 respectif pour un traitement et une diffusion simultanée.

Selon un autre mode de réalisation, un unique signal 4 peut être envoyé avec la même estampille vers chaque récepteur 3. Un tel signal 4 comprend toutes les données et chaque récepteur 3 ne choisit que les données le concernant à traiter. Par exemple, le récepteur gérant le canal audio gauche ne traitera que les données relatives au canal gauche.

Toutefois, cette vérification ne s'effectue qu'en début d'émission des signaux 4 depuis la source 2 vers les récepteurs 3. En effet, la vitesse de traitement étant identique entre la source 2 et chaque récepteur 3 grâce à la syntonisation selon l'invention, il est inutile de vérifier constamment le temps de traitement des données au niveau des récepteurs 3. Cette vérification peut quand même avoir lieu en cas d'interruption, de discontinuité du flux transmis ou de manière régulière à un rythme défini.

A ce titre, chaque récepteur 3 peut être équipé d'une mémoire de stockage provisoire des données, notamment une mémoire dite « tampon ». Afin de limiter les discontinuités dans les communications entre la source 2 et les récepteurs 3, cet espace de stockage permet de pallier les différences existantes entre les vitesses de transmission et de traitement des données. De plus, l'aspect asynchrone de réception des données, à cause du réseau de communication numérique, nécessite de stocker celle-ci dans cette mémoire tampon. Ladite mémoire tampon peut être organisée sous la forme d'une file FIFO (« First In First Out »).

Avantageusement, l'utilisation de mémoire tampon permet de profiter d'une vitesse de transmission supérieure du réseau de communication par rapport à la vitesse de traitement des données. Il est donc possible de stocker en avance des données destinées à être traitées dans un temps futur plus ou moins lointain, et ainsi de faire face par exemple à des phases de rupture de communication entre la source 2 et un ou des récepteurs 3.

L'envoi, régulier ou pas, par les récepteurs 3 du niveau de remplissage de leur mémoire tampon interne permet à la source 2 d'adapter le débit des données transmises aux récepteurs.

La présente invention offre donc une synchronisation et une syntonisation dans l'émission et la diffusion d'un flux 1 de données homogènes ou hétérogènes. Elle assure que les récepteurs 3 possèdent une heure qui est ajustée par rapport à l'heure de référence de la source d'émission 2, permettant d'aligner temporellement le traitement et la diffusion des données.

Ainsi, chaque récepteur 3 peut être considéré comme un système homogène synchrone de traitement dudit flux 1 au sein du système selon l'invention.

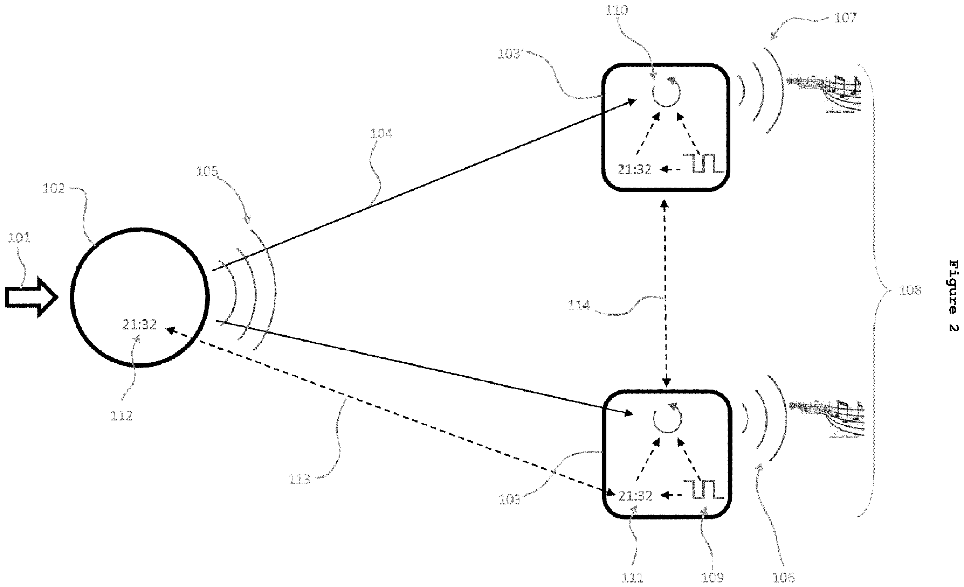

La figure 2 illustre une variante dans laquelle le flux 101 est traité par la source 102, et transmis aux récepteurs 103 et 103' sous forme de signaux 104. Les moyens de liaison peuvent être de type filaire et/ou de type sans fil (105).

Dans ce mode de réalisation de l'invention, la source 102 traite le flux avant sa transmission aux récepteurs 103 et 103', notamment pour intégrer des estampilles temporelles. Avantageusement, la source 102 peut disposer d'une horloge calendaire pour réaliser cet estampillage.

Ce mode de réalisation présente la particularité d'avoir l'horloge de référence dans un des récepteurs (103). Plus exactement, les horloges électroniques 109 et calendaires 111 présentent dans le récepteur 103 jouent le rôle d'horloge de référence. Le récepteur 103 peut d'ailleurs utiliser une horloge électronique 109 dont la fréquence n'est pas variable. Ainsi, suivant l'invention, l'ensemble des récepteurs 103' est synchronisé et syntonisé directement par rapport à un des diffuseurs de flux (103).

Pour ce faire, depuis ledit récepteur 103 vers ledit récepteur 103', et inversement, sont transmis des signaux horodatés 114 par lesdites horloges calendaires 111. La comparaison de ces signaux horodatés avec les horloges calendaires locales 111 permet de déduire les modifications à apporter à la fréquence des horloges électroniques locales 109, de manière à rattraper l'avance ou le retard temporel.

Des échanges de signaux horodatés 113 peuvent avantageusement avoir lieu entre la source de données 102 et un des récepteurs 103 ou 103', dans le but d'avoir une heure identique entre les horloges calendaires 112 et 111. Même si la source 102 n'est pas syntonisée avec les récepteurs 103 et 103', par exemple car elle ne possède pas d'horloge électronique de fréquence variable, cela permet néanmoins d'avoir une heure très proche, de façon à réaliser l'estampillage des données à traiter, et préférentiellement de transmettre l'instant futur à partir duquel réaliser le traitement.

Lors de la diffusion de chaque signal 104 par les récepteurs 103 et 103', respectivement 106 et 107, le flux initial 101 est restitué en tout ou partie. Un tel flux restitué 108 peut regrouper tout ou partie des diffusions de chaque récepteur 103 et/ou 103'.

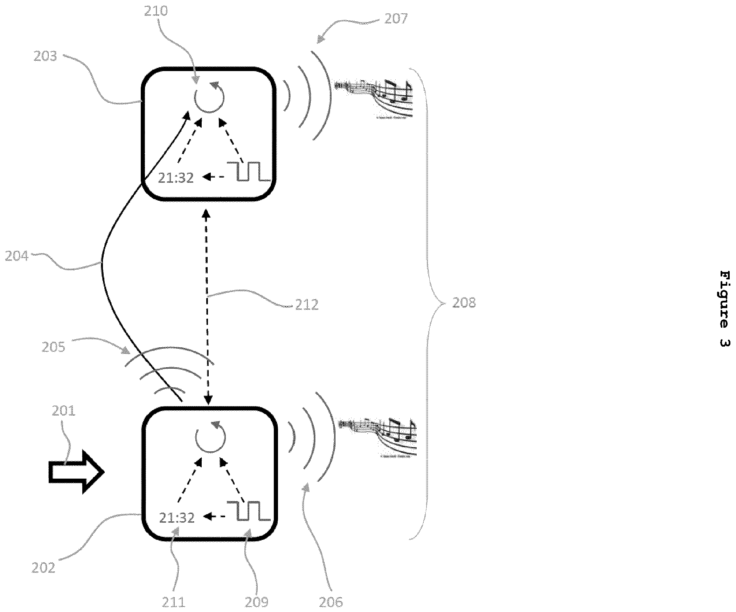

La figure 3 illustre une autre variante dans laquelle le flux 201 est reçu et traité directement par un diffuseur (202), et transmis aux récepteurs 203 sous forme de signaux 204. Les moyens de liaison peuvent être de type filaire et/ou de type sans fil (205).

Dans ce mode de réalisation de l'invention, le diffuseur 202 joue le rôle de source et de récepteur. Il traite le flux 201 avant sa transmission aux récepteurs 203, notamment pour intégrer des estampilles temporelles. 202 étant un diffuseur, il dispose d'une horloge calendaire pour réaliser cet estampillage.

Ce mode de réalisation présente également la particularité d'avoir l'horloge de référence dans un des récepteurs 202 ou 203. Plus exactement, un des couples d'horloges électroniques 209 et calendaires 211 présents dans les récepteurs 202 ou 203 joue le rôle d'horloge de référence. Le récepteur jouant le rôle d'horloge de référence peut d'ailleurs utiliser une horloge électronique 209 dont la fréquence n'est pas variable. Ainsi, suivant l'invention précédemment décrite, l'ensemble des récepteurs 202 et 203 est synchronisé et syntonisé directement par rapport à un des diffuseurs de flux (202).

Pour ce faire, depuis ledit récepteur 202 vers ledit récepteur 203, et inversement, sont transmis des signaux horodatés 212 par lesdites horloges calendaires 211. La comparaison de ces signaux horodatés 212 avec les horloges calendaires locales 211 permet de déduire les modifications à apporter à la fréquence des horloges électroniques locales 209, de manière à rattraper l'avance ou le retard temporel.

Lors de la diffusion de chaque signal 204 par les récepteurs 202 et 203, respectivement 206 et 207, le flux initial 201 est restitué en tout ou partie. Un tel flux restitué 208 peut regrouper tout ou partie des diffusions de chaque récepteur 202 et/ou 203.

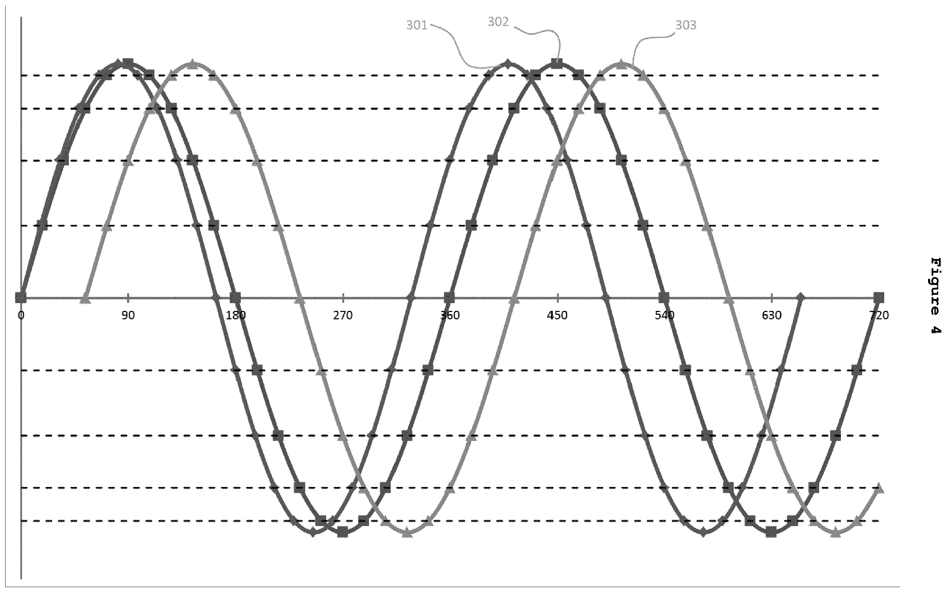

La figure 4 illustre la problématique à l'origine de l'invention.

Si des signaux provenant d'un même flux sont traités et diffusés par des récepteurs qui ne sont pas synchronisés et/ou syntonisés entre eux, le flux restitué, composé de tout ou partie des diffusions des récepteurs, n'est pas fidèle au flux original.

A titre d'exemple, un récepteur peut être composé, entre autre, d'une unité de traitement et d'un convertisseur numérique-analogique pour reconstruire les signaux issus du flux original. Ceux-ci fonctionnent par séquencement et ont besoin d'une ou plusieurs horloges électroniques pour les cadencer.

La transmission à plusieurs récepteurs distants du même signal représentatif d'une sinusoïde pure d'une certaine fréquence et d'une certaine amplitude peut donner lieu, sans la présente invention, à des diffusions variables.

Par exemple, un premier récepteur diffusera la sinusoïde 301, alors qu'un second récepteur, synchronisé mais pas syntonisé avec le premier, diffusera la sinusoïde 302. Celle-ci démarre bien au même instant, mais possède une fréquence différente, due à la fréquence différente de l'horloge électronique de cadencement du convertisseur numérique-analogique.

Un troisième récepteur, syntonisé mais pas synchronisé avec le premier, diffusera lui la sinusoïde 303. Celle-ci possède bien la même fréquence que celle de la sinusoïde 301, mais présente un déphasage constant dû à un décalage de l'instant initial de traitement des signaux.

Le pire cas, non représenté, correspond bien sûr aux signaux traités et diffusés par des récepteurs qui ne sont ni synchronisés, ni syntonisés.

Les puces en formes de losanges, carrés et triangles sur les courbes 301, 302 et 303 correspondent aux échantillons numériques transmis aux récepteurs, et servent à la reconstitution du signal analogique. Les amplitudes de ces puces, à échantillons correspondants, sont bien identiques sur les trois courbes. Les distorsions des signaux sinusoïdaux proviennent uniquement de problèmes temporels.

Il est intéressant de constater que la non syntonie entre plusieurs récepteurs engendre plusieurs conséquences. La première est que la durée de traitement des signaux issus d'un flux de durée finie ne sera pas la même pour chaque récepteur. La seconde est que la fréquence du signal diffusé par chaque récepteur sera différente des autres.

Une bonne illustration de ce double phénomène est son application au traitement de flux de données sonores. Lors de la diffusion de contenus audio d'une certaine durée, par exemple une œuvre musicale, certains récepteurs auront fini de diffuser ladite oeuvre avant d'autres, et auront donc diffusé ladite œuvre à un tempo trop élevé. L'autre conséquence est qu'ils auront diffusé l'œuvre avec un accord général plus aigu. On comprend toute la problématique quand une même œuvre est diffusée par plusieurs récepteurs, que ce soit dans le cas d'une diffusion complète de tous les canaux audio par chaque récepteur, ou dans le cas où des récepteurs différents ont en charge la diffusion d'une partie des canaux audio.

L'intérêt de la présente invention dans ce cas de figure illustratif apparait clairement. La synchronisation et la syntonisation des récepteurs entre eux permettent la diffusion simultanée de signaux en phase et sans décalage fréquentiel.

Bien entendu, l'invention n'est pas limitée aux exemples illustrés et décrits précédemment qui peuvent présenter des variantes et modifications sans pour autant sortir du cadre de l'invention.

En particulier, la présente invention trouvera une application dans la transmission de flux de données sur un réseau de type informatique, tel Internet ou Intranet, entre un serveur (source) et au moins un terminal client (récepteur) ou bien entre plusieurs clients.

## Revendications

1. Procédé de diffusion synchronisée de flux de données, dans lequel au moins un flux de données (1) traitées sous forme de signaux (4) est transmis depuis une source émettrice (2) vers au moins deux récepteurs (3, 3',...) distants de diffusion dudit ou desdits flux (1), lesdits récepteurs (3, 3',...) comprenant chacun au moins une horloge électronique interne (9), et une horloge calendaire (11), et ladite source (2) comprenant une horloge calendaire de référence (13) cadencée par une horloge électronique interne (12), consistant à :
- cadencer l'horloge calendaire (11) desdits récepteurs (3, 3',...) par ladite horloge électronique interne (9) ;
- estimer les écarts temporels entre chaque récepteur (3, 3',...) d'une part et ladite source (2) d'autre part, par échange et comparaison entre chaque récepteur (3, 3',...) et ladite source (2) de signaux horodatés (14) par l'horloge calendaire (11) de chaque récepteur (3, 3',...) et l'horloge calendaire (13) de la source (2) ;
- ajuster l'heure de l'horloge calendaire (11) desdits récepteurs (3, 3',...), par modification directe de ses valeurs internes, en cas de différence supérieure à une valeur prédéfinie entre les heures de l'horloge calendaire (11) de chaque récepteur (3, 3',...) et de l'horloge calendaire de référence (13) ;
- estimer le temps de transit entre ladite source (2) et chaque récepteur (3, 3',...), pour corriger l'estime des écarts temporels ;
- ajuster l'horloge électronique interne (9) de chaque récepteur (3, 3',...) en fonction de ladite estime des écarts temporels avec la source (2), par augmentation ou diminution de sa fréquence, dans le but d'annuler ces écarts temporels ;
- cadencer les unités de traitement de données (10) desdits récepteurs (3, 3',...) par ladite horloge électronique interne (9) ou une horloge électronique dépendante et corrélée ; et
- estampiller lesdites données au niveau de ladite source (2) ;
de manière à rendre l'heure calendaire de chaque récepteur (3, 3',...) identique à l'heure calendaire de référence de la source (2), et donc les heures calendaires de tous les récepteurs (3, 3',...) identiques entre eux, et de synchroniser le traitement et la diffusion au niveau de chaque récepteur (3, 3',...) desdites données estampillées.

2. Procédé de diffusion synchronisée de flux de données, dans lequel au moins un flux de données (101) traitées sous forme de signaux (104) est transmis depuis une source émettrice (102) vers au moins deux récepteurs (103, 103',...) distants de diffusion dudit ou desdits flux (101), lesdits récepteurs (103, 103',...) comprenant chacun au moins une horloge électronique interne (109), et une horloge calendaire (111), l'un des récepteurs (103) constituant une référence, consistant à :
- cadencer l'horloge calendaire (111) desdits récepteurs (103, 103',...) par ladite horloge électronique interne (109) ;
- estimer les écarts temporels entre chaque récepteur (103',...) d'une part et ledit récepteur référent (103) d'autre part, par échange et comparaison entre chaque récepteur (103',...) et ledit récepteur référent (103) de signaux horodatés (114) par l'horloge calendaire (111) de chaque récepteur (103',...) et l'horloge calendaire (111) dudit récepteur référent (103) ;
- ajuster l'heure de l'horloge calendaire (111) desdits récepteurs (103',...), par modification directe de ses valeurs internes, en cas de différence supérieure à une valeur prédéfinie entre les heures des horloges calendaires (111) des récepteurs (103',...) et du récepteur référent (103) ;
- estimer le temps de transit entre ledit récepteur référent (103) et chaque récepteur (103',...), pour corriger l'estime des écarts temporels ;
- ajuster l'horloge électronique interne (109) de chaque récepteur (103',...) en fonction de ladite estime des écarts temporels avec ledit récepteur référent (103), par augmentation (si le récepteur est en retard) ou diminution (si le récepteur est en avance) de sa fréquence, dans le but d'annuler ces écarts temporels ;
- cadencer les unités de traitement de données (110) desdits récepteurs (103, 103',...) par lesdites horloges électroniques internes (109) ou une horloge électronique dépendante et corrélée; et
- estampiller lesdites données au niveau de ladite source (102) ;
de manière à rendre l'heure calendaire de chaque récepteur (103',...) identique à l'heure calendaire du récepteur référent (103), et donc les heures calendaires de tous les récepteurs (103, 103',...) identiques entre eux, et de synchroniser le traitement et la diffusion au niveau de chaque récepteur (103, 103',...) desdites données estampillées.

3. Procédé de diffusion synchronisée de flux de données, dans lequel au moins un flux de données (201) traitées sous forme de signaux (204) est reçu par un récepteur référent (202) et retransmis vers au moins un récepteur (203, 203',...) distants de diffusion dudit ou desdits flux (201), ledit récepteur référent (202) pouvant diffuser ledit ou lesdits flux (201), lesdits récepteurs (202, 203, 203',...) comprenant chacun au moins une horloge électronique interne (209) et une horloge calendaire (211), consistant à :
- cadencer l'horloge calendaire (211) desdits récepteurs (202, 203, 203',...) par ladite horloge électronique interne (209) ;
- estimer les écarts temporels entre chaque récepteur (203, 203',...) d'une part et le récepteur référent (202) d'autre part, par échange et comparaison entre chaque récepteur (203, 203',...) et le récepteur référent (202) de signaux horodatés (212) par l'horloge calendaire (211) de chaque récepteur (202, 203, 203',...) ;
- ajuster l'heure de l'horloge calendaire (211) desdits récepteurs (203, 203',...), par modification directe de ses valeurs internes, en cas de différence supérieure à une valeur prédéfinie entre les heures des horloges calendaires (211) des récepteurs (203, 203',...) et du récepteur référent (202) ;
- estimer le temps de transit entre le récepteur référent (202) et chaque récepteur (203, 203',...), pour corriger l'estime des écarts temporels ;
- ajuster l'horloge électronique interne (209) de chaque récepteur (203, 203',...) en fonction de ladite estime des écarts temporels avec le récepteur référent (202), par augmentation ou diminution de sa fréquence, dans le but d'annuler ces écarts temporels ;
- cadencer les unités de traitement de données (210) desdits récepteurs (202, 203, 203',...) par ladite horloge électronique interne (209) ou une horloge électronique dépendante et corrélée ; et
- estampiller lesdites données au niveau dudit récepteur référent (202) ;
de manière à rendre l'heure calendaire de chaque récepteur (203, 203',...) identique à l'heure calendaire du récepteur de référence (202), et donc les heures calendaires de tous les récepteurs (202, 203, 203',...) identiques entre eux, et de synchroniser le traitement et la diffusion au niveau de chaque récepteur (202, 203, 203',...) desdites données estampillées.

4. Procédé de diffusion selon l'une des revendications 1 ou 2, **caractérisé par le fait qu'**il consiste à estampiller les données par marquage au niveau de la source et à traiter les données estampillées correspondant à la même marque simultanément au niveau de chaque récepteur.

5. Procédé de diffusion selon la revendication 3, **caractérisé par le fait qu'**il consiste à estampiller les données par marquage au niveau du récepteur référent (202) et à traiter les données estampillées correspondant à la même marque simultanément au niveau de chaque récepteur, y compris le référent (202, 203, 203',...).

6. Procédé de diffusion selon l'une quelconque des revendications 1 à 5, **caractérisé par le fait que** le démarrage du traitement synchrone des données estampillées au niveau de chaque élément de diffusion peut être réalisé à un instant futur paramétrable.

7. Procédé de diffusion selon l'une quelconque des revendications 1 à 6, **caractérisé par le fait que** ledit flux de données peut être transmis aux récepteurs avant leur traitement futur, et stocké dans une mémoire temporaire.

8. Système de diffusion synchronisée de flux de données, comprenant une source émettrice (2) d'un flux de données (1), traitées sous forme de signaux (4), transmis vers au moins deux récepteurs (3, 3',...) distants de diffusion dudit flux (1), lesdits récepteurs (3, 3',...) comprenant chacun au moins une horloge électronique interne (9), et ladite source (2) comprenant une horloge calendaire de référence (13) cadencée par une horloge électronique interne (12), dans lequel:
- chaque récepteur (3, 3',...) comprend :
∘ une horloge calendaire (11) cadencée par ladite horloge électronique interne (9) ;
∘ des moyens d'ajustement de l'heure de ladite horloge calendaire (11), par modification directe de ses valeurs internes;
∘ des dispositifs de traitement de données (10) cadencés par ladite horloge électronique interne (9) ou une horloge électronique dépendante et corrélée ;
∘ des moyens d'ajustement de ladite horloge électronique interne (9) par modification de sa fréquence ;
- lesdits moyens d'ajustement ajustent ladite horloge électronique interne (9) en fonction de ladite horloge calendaire de référence (13) de la source, notamment en estimant les écarts temporels entre chaque récepteur (3, 3',...) d'une part et ladite source (2) d'autre part, par échange et comparaison entre chaque récepteur (3, 3',...) et ladite source (2) de signaux horodatés (14) par l'horloge calendaire (11) de chaque récepteur (3, 3',...) et l'horloge calendaire (13) de la source (2), par augmentation ou diminution de sa fréquence, dans le but d'annuler ces écarts temporels ;
- lesdits moyens d'ajustement ajustent ladite horloge calendaire (11) par modification directe en cas de différence supérieure à une valeur prédéfinie entre les heures de l'horloge calendaire (11) de chaque récepteur (3, 3',...) et de l'horloge calendaire (13) de la source (2) ;
- ladite estime des écarts temporels est corrigée en tenant compte de l'estime du temps de transit entre ladite source (2) et chaque récepteur (3, 3',...) ; et
- lesdites données sont estampillées au niveau de ladite source (2) ;
de manière à rendre l'heure calendaire de chaque récepteur (3, 3',...) identique à l'heure calendaire de référence de la source (2), et donc les heures calendaires de tous les récepteurs (3, 3',...) identiques entre eux, et de synchroniser le traitement et la diffusion au niveau de chaque récepteur (3, 3',...) desdites données estampillées.

9. Système de diffusion synchronisée de flux de données, comprenant une source émettrice (102) d'un flux de données (101) traitées sous forme de signaux (104) transmis vers au moins deux récepteurs (103, 103',...) distants de diffusion dudit flux (101), lesdits récepteurs (103, 103',...) comprenant chacun au moins une horloge électronique interne (109), et l'un desdits récepteurs (103) constituant une référence, dans lequel
- chaque récepteur (103, 103',...) comprend :
∘ une horloge calendaire (111) cadencée par ladite horloge électronique interne (109) ;
∘ des moyens d'ajustement de l'heure de ladite horloge calendaire (111), par modification directe de ses valeurs internes ;
∘ des dispositifs de traitement de données (110) cadencés par ladite horloge électronique interne (109) ou une horloge électronique dépendante et corrélée;
- au moins chaque récepteur non référent (103',...) comprend des moyens d'ajustement de ladite horloge électronique interne (109) par modification de sa fréquence,
- lesdits moyens d'ajustement ajustent ladite horloge électronique interne (109) en fonction de l'horloge calendaire dudit récepteur de référence (103), notamment en estimant les écarts temporels entre chaque récepteur (103',...) d'une part, et ledit récepteur de référence (103) d'autre part, par échange et comparaison entre chaque récepteur (103',...) et ledit récepteur référent (103) de signaux horodatés (114) par lesdites horloges calendaires (111) des récepteurs, par augmentation ou diminution de sa fréquence, dans le but d'annuler ces écarts temporels ;
- lesdits moyens d'ajustement ajustent ladite horloge calendaire (111) par modification directe en cas de différence supérieure à une valeur prédéfinie entre les heures des horloges calendaires (111) de chaque récepteur (103',...) et dudit récepteur de référence (103) ;
- ladite estime des écarts temporels est corrigée en tenant compte de l'estime du temps de transit entre ledit récepteur de référence (103) et chaque récepteur (103',...); et
- lesdites données sont estampillées au niveau de ladite source (102) ;
de manière à rendre l'heure calendaire de chaque récepteur (103',...) identique à l'heure calendaire du récepteur référent (103), et donc les heures calendaires de tous les récepteurs (103, 103',...) identiques entre eux, et de synchroniser le traitement et la diffusion au niveau de chaque récepteur (103, 103',...) desdites données estampillées.

10. Système de diffusion synchronisée de flux de données, comprenant un récepteur référent (202) d'un flux de données (201), qui retransmet le flux reçu sous forme de signaux (204) vers au moins un récepteur (203, 203',...) distant de diffusion dudit flux (201), lesdits récepteurs (202, 203, 203',...) comprenant chacun au moins une horloge électronique interne (209), dans lequel :
- chaque récepteur (202, 203, 203',...) comprend:
∘ une horloge calendaire (211) cadencée par ladite horloge électronique interne (209) ;
∘ des moyens d'ajustement de l'heure de ladite horloge calendaire (211), par modification directe de ses valeurs internes ;
∘ des dispositifs de traitement de données (210) cadencés par ladite horloge électronique interne (209) ou une horloge électronique dépendante et corrélée ;
- au moins chaque récepteur non référent (203, 203',...) comprend des moyens d'ajustement de ladite horloge électronique interne (209) par modification de sa fréquence,
- lesdits moyens d'ajustement ajustent ladite horloge électronique interne (209) en fonction de l'horloge calendaire dudit récepteur de référence (202), notamment en estimant les écarts temporels entre chaque récepteur (203, 203',...) d'une part, et ledit récepteur de référence (202) d'autre part, par échange et comparaison entre chaque récepteur (203, 203',...) et ledit récepteur référent (202) de signaux horodatés (212) par lesdites horloges calendaires (211), par augmentation ou diminution de sa fréquence, dans le but d'annuler ces écarts temporels ;
- lesdits moyens d'ajustement ajustent ladite horloge calendaire (211) par modification directe en cas de différence supérieure à une valeur prédéfinie entre les heures des horloges calendaires (211) de chaque récepteur (203, 203',...) et dudit récepteur de référence (202) ;
- ladite estime des écarts temporels est corrigée en tenant compte de l'estime du temps de transit entre ledit récepteur de référence (202) et chaque récepteur (203, 203',...) ; et
- lesdites données sont estampillées au niveau dudit récepteur de référence (202) ;
de manière à rendre l'heure calendaire de chaque récepteur (203, 203',...) identique à l'heure calendaire du récepteur référent (202), et donc les heures calendaires de tous les récepteurs (202, 203, 203',...) identiques entre eux, et de synchroniser le traitement et la diffusion au niveau de chaque récepteur (202, 203, 203',...) desdites données estampillées.

## Patentansprüche

1. Verfahren zur synchronisierten Übertragung von Datenströmen, bei dem mindestens ein Datenstrom (1), der in Form von Signalen (4) verarbeitet wird, von einer Sendequelle (2) an mindestens zwei entfernte Empfänger (3, 3' ,...) dieses oder dieser Datenströme (1) übertragen wird, und wobei die Empfänger (3, 3',...) jeweils mindestens eine interne elektronische Uhr (9) und eine Kalenderuhr (11) umfassen und die Quelle (2) eine Referenz-Kalenderuhr (13) umfasst, die durch eine interne elektronische Uhr (12) getaktet wird. Das Verfahren umfasst folgende Funktionen:
- die Kalenderuhr (11) dieser Empfänger (3, 3' ,...) durch diese interne elektronische Uhr(9) takten;
- die Zeitabweichungen zwischen jedem Empfänger (3, 3',...) einerseits und der Quelle (2) andererseits, durch Austausch und Vergleich von mit durch die Kalenderuhr (11) jedes Empfängers (3, 3',...) und die Kalenderuhr (13) der Quelle (2) mit Zeitstempel versehenen Signalen (14) zwischen jedem Empfänger (3, 3',...) und dieser Quelle (2) schätzen;
- die Uhrzeit der Kalenderuhr (11) dieser Empfänger (3, 3' ,...) durch direkte Änderung ihrer internen Werte richtig einstellen, wenn die Differenz zwischen den Zeiten der Kalenderuhr (11) von jedem Empfänger (3, 3' ,...) und der Referenz-Kalenderuhr (13) einen vorgegebenen Wert überschreitet;
- die Übertragungszeit zwischen dieser Quelle (2) und jedem Empfänger (3, 3',...) schätzen, um die geschätzten Zeitabweichungen zu korrigieren;
- die interne elektronische Uhr (9) jedes Empfängers (3, 3' ,...) anhand dieser geschätzten Zeitabweichungen zur Quelle (2) durch Erhöhung oder Verringerung ihrer Frequenz richtig einstellen, um diese Zeitabweichungen zu bereinigen;
- die Datenverarbeitungseinheiten (10) dieser Empfänger (3, 3' ,...) durch die interne elektronische Uhr (9) oder eine abhängige und korrelierte elektronische Uhr takten und
- diese Daten an der Quelle (2) mit Stempel versehen;
damit die Kalenderzeit jedes Empfängers (3, 3',...) mit der Referenz-Kalenderzeit der Quelle (2) und damit die Kalenderzeiten aller untereinander gleichen Empfänger (3, 3',...) identisch werden und die Verarbeitung und Übertragung der mit Stempel versehenen Daten an jedem Empfänger (3, 3',...) synchronisiert werden.

2. Verfahren zur synchronisierten Übertragung von Datenströmen, bei dem mindestens ein Datenstrom (101), der in Form von Signalen (104) verarbeitet wird, von einer Sendequelle (102) an mindestens zwei entfernte Empfänger (103, 103',...) dieses oder dieser Datenströme (101) übertragen wird, wobei diese Empfänger (103, 103' ,...) jeweils mindestens eine interne elektronische Uhr (109) und eine Kalenderuhr (111) umfassen und einer der Empfänger (103) eine Referenz bildet. Das Verfahren umfasst folgende Funktionen:
- die Kalenderuhr (111) dieser Empfänger (103, 103',...) durch die interne elektronische Uhr(109) takten;
- die Zeitabweichungen zwischen jedem Empfänger (103' ,...) einerseits und dem Referenz-Empfänger (103) andererseits, durch Austausch und Vergleich von mit durch die Kalenderuhr (111) jedes Empfängers (103' ,...) und die Kalenderuhr (111) dieses Referenz-Empfängers (103) mit Zeitstempel versehenen Signalen (114) schätzen;
- die Uhrzeit der Kalenderuhr (111) dieser Empfänger (103',...) durch direkte Änderung ihrer internen Werte richtig einstellen, wenn die Differenz zwischen den Zeiten der Kalenderuhr (111) der Empfänger (103',...) und dem Referenz-Empfänger (103) einen vorgegebenen Wert überschreitet;
- die Übertragungszeit zwischen diesem Referenz-Empfänger (103) und jedem Empfänger (103',...) schätzen, um die Schätzung der Zeitabweichungen zu korrigieren;
- die interne elektronische Uhr (109) jedes Empfängers (103',...) anhand dieser geschätzten Zeitabweichungen zum Referenz-Empfänger (103) durch Erhöhung oder Verringerung ihrer Frequenz richtig einstellen, um diese Zeitabweichungen zu bereinigen;
- die Datenverarbeitungseinheiten (110) dieser Empfänger (103, 103',...) durch diese internen elektronischen Uhren (109) oder eine abhängige und korrelierte elektronische Uhr takten und
- diese Daten an dieser Quelle (102) mit Stempel versehen;
damit die Kalenderzeit jedes Empfängers (103' ,...) mit der Kalenderzeit des Referenz-Empfängers (103) und die Kalenderzeiten aller untereinander gleichen Empfänger (103, 103' ,...) identisch sind und die Verarbeitung und Übertragung der mit Stempel versehenen Daten an jedem Empfänger (103, 103',...) synchronisiert wird.

3. Verfahren zur synchronisierten Übertragung von Datenströmen, bei dem mindestens ein Datenstrom (201), der in Form von Signalen (204) verarbeitet wird, von einem Referenz-Empfänger (202) empfangen und an mindestens einen entfernten Empfänger (203, 203',...) des oder der Datenströme (201) weitergeleitet wird, wobei der Referenz-Empfänger (202) den oder die Datenströme (201) senden kann und diese Empfänger (202, 203, 203',...) jeweils mindestens eine interne elektronische Uhr(209) und eine Kalenderuhr (211) umfassen. Das Verfahren umfasst folgende Funktionen:
- die Kalenderuhr (211) dieser Empfänger (202, 203, 203' ,...) durch diese interne elektronische Uhr (209) takten;
- die Zeitabweichungen zwischen jedem Empfänger (203, 203',...) einerseits und dem Referenz-Empfänger (202) andererseits schätzen, nämlich durch Austausch und Vergleich von mit durch die Kalenderuhr (211) jedes Empfängers (202, 203, 203',...) mit Zeitstempel versehenen Signalen (212) zwischen jedem Empfänger (202, 203, 203',...) und dem Referenz-Empfänger (202);
- die Uhrzeit der Kalenderuhr (211) dieser Empfänger (203, 203',...) durch direkte Änderung ihrer internen Werte richtig einstellen, wenn die Differenz zwischen den Zeiten der Kalenderuhren (211) der Empfänger (203, 203' ,...) und des Referenz-Empfängers (202) einen vorgegebenen Wert überschreitet;
- die Übertragungszeit zwischen dem Referenz-Empfänger (202) und jedem Empfänger (203, 203' ,...) schätzen, um die geschätzten Zeitabweichungen zu korrigieren;
- die interne elektronische Uhr (209) jedes Empfängers (203, 203' ,...) anhand dieser geschätzten Zeitabweichungen zum Referenz-Empfänger (202) durch Erhöhung oder Verringerung ihrer Frequenz richtig einstellen, um diese Zeitabweichungen zu bereinigen;
- die Datenverarbeitungseinheiten (210) dieser Empfänger (202, 203, 203',...) durch die interne elektronische Uhr (209) oder eine abhängige und korrelierte elektronische Uhr takten und
- diese Daten an diesem Referenz-Empfänger (202) mit Stempel versehen;
damit die Kalenderzeit jedes Empfängers (203, 203',...) mit der Kalenderzeit des Referenz-Empfängers (202) und die Kalenderzeiten aller untereinander gleichen Empfänger (202, 203, 203',...) identisch sind und die Verarbeitung und Übertragung der mit Stempel versehenen Daten an jedem Empfänger (202, 203, 203',...) synchronisiert werden.

4. Übertragungsverfahren gemäß einer der Forderungen 1 oder 2, welches **dadurch gekennzeichnet ist, dass** die Daten an der Quelle mit Stempel markiert werden und die mit Stempel versehenen Daten mit der gleichen Markierung an jedem Empfänger gleichzeitig verarbeitet werden.

5. Übertragungsverfahren gemäß Forderung 3, welches **dadurch gekennzeichnet ist, dass** die Daten am Referenz-Empfänger (202) mit Stempel markiert werden und die mit Stempel versehenen Daten mit der gleichen Markierung an jedem Empfänger, einschließlich Referenz-Empfänger (202, 203, 203',...), gleichzeitig verarbeitet werden.

6. Übertragungsverfahren nach einer beliebigen der Forderungen 1 bis 5, welches **dadurch gekennzeichnet ist, dass** der Start der synchronen Verarbeitung der an jedem Übertragungselement gestempelten Daten zu einem parametrierbaren späteren Zeitpunkt durchgeführt werden kann.

7. Übertragungsverfahren nach einem beliebigen der Forderungen 1 bis 6, welches **dadurch gekennzeichnet ist, dass** dieser Datenstrom vor seiner zukünftigen Verarbeitung an die Empfänger übertragen und in einem temporären Speicher gespeichert werden kann.

8. System zur synchronisierten Übertragung von Datenströmen, bei dem ein Datenstrom (1), der in Form von Signalen (4) verarbeitet wird, von einer Sendequelle (2) an mindestens zwei entfernte Empfänger (3, 3',...) dieses Datenstroms (1) übertragen wird, wobei die Empfänger (3, 3',...) jeweils mindestens eine interne elektronische Uhr (9) umfassen und die Quelle (2) eine Referenz-Kalenderuhr (13) umfasst, die durch eine interne elektronische Uhr (12) getaktet wird; hierbei:
- umfasst jeder Empfänger (3, 3' ,...) :
∘ eine Kalenderuhr (11), die durch die interne elektronische Uhr (9) getaktet wird;
∘ Mittel zum richtigen Einstellen der Uhrzeit dieser Kalenderuhr (11) durch direkte Änderung ihrer internen Werte;
∘ Datenverarbeitungsvorrichtungen (10), die durch die interne elektronische Uhr (9) oder eine abhängige und korrelierte elektronische Uhr getaktet werden;
∘ Einstellmittel für diese interne elektronische Uhr (9) durch Änderung ihrer Frequenz;
- stellen diese Einstellmittel die interne elektronische Uhr (9) anhand der Referenz-Kalenderuhr (13) der Quelle richtig ein, indem sie die Zeitabweichungen zwischen jedem Empfänger (3, 3',...) einerseits und dieser Quelle (2) andererseits durch Austausch und Vergleich von mit durch die Kalenderuhr (11) jedes Empfängers (3, 3',...) und die Kalenderuhr (13) der Quelle (2) mit Zeitstempel versehenen Signalen (14) zwischen jedem Empfänger (3, 3',...) und der Quelle (2), schätzen, um diese Zeitabweichungen durch Erhöhung oder Verringerung ihrer Frequenz zu bereinigen;
- stellen diese Einstellmittel diese Kalenderuhr (11) durch direkte Änderung richtig ein, wenn die Differenz zwischen den Zeiten der Kalenderuhr (11) jedes Empfängers (3, 3',...) und der Kalenderuhr (13) der Quelle (2) einen vorgegebenen Wert überschreitet;
- werden diese geschätzten Zeitabweichungen unter Berücksichtigung der geschätzten Übertragungszeit zwischen der Quelle (2) und jedem Empfänger (3, 3',...) korrigiert und
- werden diese Daten an dieser Quelle (2) mit Stempel versehen;
damit die Kalenderzeit jedes Empfängers (103' ,...) mit der Kalenderzeit des Referenz-Empfängers (103) und die Kalenderzeiten aller untereinander gleichen Empfänger (103, 103' ,...) identisch werden und die Verarbeitung und Übertragung dieser mit Stempel versehenen Daten an jedem Empfänger (103, 103' ,...) synchronisiert werden.

9. System zur synchronisierten Übertragung von Datenströmen, bei dem ein Datenstrom (101), der in Form von Signalen (104) verarbeitet wird, von einer Sendequelle (102) an mindestens zwei entfernte Empfänger (103, 103',...) dieses Datenstroms (101) übertragen wird, wobei die Empfänger (103, 103',...) jeweils mindestens eine interne elektronische Uhr (109) umfassen und einer der Empfänger (103) eine Referenz bildet; hierbei:
- umfasst jeder Empfänger (103, 103',...) :
∘ eine Kalenderuhr (111), die durch die interne elektronische Uhr (109) getaktet wird;
∘ Mittel zum richtigen Einstellen der Uhrzeit dieser Kalenderuhr (111) durch direkte Änderung ihrer internen Werte;
∘ Datenverarbeitungsvorrichtungen (110), die durch die interne elektronische Uhr (109) oder eine abhängige und korrelierte elektronische Uhr getaktet werden;
- umfasst mindestens jeder nicht als Referenz agierende Empfänger (103' ,...) Mittel zum richtigen Einstellen der internen elektronischen Uhr (109) durch Änderung ihrer Frequenz,
- stellen diese Einstellmittel die interne elektronische Uhr (109) anhand der Kalenderuhr dieses Referenz-Empfängers (103) richtig ein, indem sie die Zeitabweichungen zwischen jedem Empfänger (103',...) einerseits und diesem Referenz-Empfänger (103) andererseits durch Austausch und Vergleich von mit durch die Kalenderuhren (111) der Empfänger mit Zeitstempel versehenen Signalen (114) zwischen jedem Empfänger (103',...) und dem Referenz-Empfänger (103), schätzen, um diese Zeitabweichungen durch Erhöhung oder Verringerung ihrer Frequenz zu bereinigen;
- stellen die Einstellmittel diese Kalenderuhr (111) durch direkte Änderung richtig ein, wenn die Differenz zwischen den Zeiten der Kalenderuhren (111) jedes Empfängers (103' ,...) und der Kalenderuhr des Referenz-Empfängers (103) einen vorgegebenen Wert überschreitet;
- werden die geschätzten Zeitabweichungen unter Berücksichtigung der geschätzten Übertragungszeit zwischen diesem Referenz-Empfänger (103) und jedem Empfänger (103',...) korrigiert und
- werden diese Daten an dieser Quelle (102) mit Stempel versehen;
damit die Kalenderzeit jedes Empfängers (103' ,...) mit der Kalenderzeit des Referenz-Empfängers (103) und die Kalenderzeiten aller untereinander gleichen Empfänger (103, 103' ,...) identisch werden und die Verarbeitung und Übertragung dieser mit Stempel versehenen Daten an jedem Empfänger (103, 103' ,...) synchronisiert werden.

10. System zur synchronisierten Übertragung von Datenströmen, das einen Referenz-Empfänger (202) eines Datenstroms (201) umfasst, der den empfangenen Datenstrom in Form von Signalen (204) an mindestens einen entfernten Empfänger (203, 203' ,...)dieses Datenstroms (201) weiterleitet, wobei die Empfänger (202, 203, 203',...) jeweils mindestens eine interne elektronische Uhr (209) umfassen; hierbei:
- umfasst jeder Empfänger (202, 203, 203',...) :
∘ eine Kalenderuhr (211), die durch die interne elektronische Uhr (209) getaktet wird;
∘ Mittel zum richtigen Einstellen der Uhrzeit dieser Kalenderuhr (211) durch direkte Änderung ihrer internen Werte;
∘ Datenverarbeitungsvorrichtungen (210), die durch die interne elektronische Uhr (209) oder eine abhängige und korrelierte elektronische Uhr getaktet werden;
- umfasst mindestens jeder nicht als Referenz agierende Empfänger (203, 203' ,...) Mittel zum richtigen Einstellen dieser internen elektronischen Uhr (209) durch Änderung ihrer Frequenz,
- stellen diese Einstellmittel die interne elektronische Uhr (209) in Abhängigkeit von der Kalenderuhr dieses Referenz-Empfängers (202) ein, indem sie die Zeitabweichungen zwischen jedem Empfänger (203, 203',...) einerseits und diesem Referenz-Empfänger (202) andererseits durch Austausch und Vergleich von mit durch diese Kalenderuhren (211) mit Zeitstempel versehenen Signalen (212) zwischen jedem Empfänger (203, 203',...) und dem Referenz-Empfänger (202) schätzen, um diese Zeitabweichungen durch Erhöhung oder Verringerung ihrer Frequenz zu bereinigen;
- stellen die Einstellmittel diese Kalenderuhr (211) durch direkte Änderung ein, wenn die Differenz zwischen den Zeiten der Kalenderuhren (211) jedes Empfängers (203, 203',...) und der Kalenderuhr des Referenz-Empfängers (202) einen vorgegebenen Wert überschreitet;
- wird diese Schätzung der Zeitabweichungen unter Berücksichtigung der geschätzten der Übertragungszeit zwischen diesem Referenz-Empfänger (202) und jedem Empfänger (203, 203' ,...) korrigiert und
- werden diese Daten an diesem Referenz-Empfänger (202) mit Stempel versehen;
damit die Kalenderzeit jedes Empfängers (203, 203' ,...) mit der Kalenderzeit des Referenz-Empfängers (202) und die Kalenderzeiten aller untereinander gleichen Empfänger (202, 203, 203',...) identisch werden und die Verarbeitung und Übertragung der mit Stempel versehenen Daten an jedem Empfänger (202, 203, 203',...) synchronisiert wird.

## Claims

1. Method for the synchronized broadcast of data streams, wherein at least one stream of processed data (1) in the form of signals (4) is transmitted from a transmission source (2) to at least two remote receivers (3, 3',...) for broadcasting said stream (s) (1), with said receivers (3, 3',...) each comprising at least one internal electronic clock (9), and a calendar clock (11), and said source (2) comprising a reference calendar clock (13) clocked by an internal electronic clock (12), consisting of:
- clocking the calendar clock (11) of said receivers (3, 3' ,...) by means of said internal electronic clock (9);
- estimating the time differences between each receiver (3, 3' ,...)on the one hand and said source (2) on the other hand, by exchanging and comparing between each receiver (3, 3' ,...) and said source (2) signals (14) timestamped by the calendar clock (11) of each receiver (3, 3',...) and the calendar clock (13) of the source (2) ;
- adjusting the time of the calendar clock (11) of said receivers (3, 3' ,...), by directly modifying its internal values, where there is a difference greater than a predefined value between the times of the calendar clock (11) of each receiver (3, 3' ,...) and of the reference calendar clock (13);
- estimating the transit time between said source (2) and each receiver (3, 3',...), to correct the estimate of the time differences;
- adjusting the internal electronic clock (9) of each receiver (3, 3',...) according to said estimate of the time differences with the source (2), by increasing or reducing its frequency, with the aim of eliminating these time differences;
- clocking the data processing units (10) of said receivers (3, 3',...) by means of said internal electronic clock (9) or a dependent correlated electronic clock; and
- stamping said data at said source (2);
so as to make the calendar time of each receiver (3, 3',...) identical to the reference calendar time of the source (2), and therefore make the calendar times of all the receivers (3, 3',...) identical to one another, and to synchronize the processing and broadcasting at each receiver (3, 3' ,...) of said stamped data.

2. Method for the synchronized broadcast of data streams, wherein at least one stream of processed data (101) in the form of signals (104) is transmitted from a transmission source (102) to at least two remote receivers (103, 103' ,...) for broadcasting said stream(s) (101), said receivers (103, 103',...) each comprising at least one internal electronic clock (109), and a calendar clock (111), one of the receivers (103) constituting a reference, consisting of:
- clocking the calendar clock (111) of said receivers (103, 103',...) by means of said internal electronic clock (109);
- estimating the time differences between each receiver (103',...) on the one hand and said reference receiver (103) on the other hand, by exchanging and comparing between each receiver (103' ,...) and said reference receiver (103) signals (114) timestamped by the calendar clock (111) of each receiver (103' ,...) and the calendar clock (111) of said reference receiver (103);
- adjusting the time of the calendar clock (111) of said receivers (103',...), by directly modifying its internal values, where there is a difference greater than a predefined value between the times of the calendar clocks (111) of the receivers (103',...) and of the reference receiver (103);
- estimating the transit time between said reference receiver (103) and each receiver (103' ,...), to correct the estimate of the time differences;
- adjusting the internal electronic clock (109) of each receiver (103',...) according to said estimate of the time differences with said reference receiver (103), by increasing or reducing its frequency, with the aim of eliminating these time differences;
- clocking the data processing units (110) of said receivers (103, 103',...) by means of said internal electronic clocks (109) or a dependent correlated electronic clock; and
- stamping said data at said source (102);
so as to make the calendar time of each receiver (103',...) identical to the calendar time of the reference receiver (103), and therefore make the calendar times of all the receivers (103, 103',...) identical to one another, and to synchronize the processing and broadcasting at each receiver (103, 103',...) of said stamped data.

3. Method for the synchronized broadcast of data streams, wherein at least one stream of processed data (201) in the form of signals (204) is received by a reference receiver (202) and retransmitted to at least one remote receiver (203, 203',...) for broadcasting said stream(s) (201), said reference receiver (202) being able to broadcast said stream(s) (201), said receivers (202, 203, 203',...) each comprising at least one internal electronic clock (209) and a calendar clock (211), consisting of:
- clocking the calendar clock (211) of said receivers (202, 203, 203',...) by means of said internal electronic clock (209);
- estimating the time differences between each receiver (203, 203' ,...) on the one hand and the reference receiver (202) on the other hand, by exchanging and comparing between each receiver (203, 203',...) and the reference receiver (202) signals (212) timestamped by the calendar clock (211) of each receiver (202, 203, 203' ,...) ;
- adjusting the time of the calendar clock (211) of said receivers (203, 203' ,...), by directly modifying its internal values, where there is a difference greater than a predefined value between the times of the calendar clocks (211) of the receivers (203, 203',...) and of the reference receiver (202);
- estimating the transit time between the reference receiver (202) and each receiver (203, 203' ,...), to correct the estimate of the time differences;
- adjusting the internal electronic clock (209) of each receiver (203, 203',...) according to said estimate of the time differences with the reference receiver (202), by increasing or reducing its frequency, with the aim of eliminating these time differences;
- clocking the data processing units (210) of said receivers (202, 203, 203',...) by means of said internal electronic clock (209) or a dependent correlated electronic clock; and
- stamping said data at said reference receiver (202);
so as to make the calendar time of each receiver (203, 203',...) identical to the calendar time of the reference receiver (202), and therefore make the calendar times of all the receivers (202, 203, 203',...) identical to one another, and to synchronize the processing and broadcasting at each receiver (202, 203, 203' ,...) of said stamped data.

4. Broadcast method according to one of claims 1 or 2, **characterized in that** it consists of stamping the data by marking at the source and processing the stamped data corresponding to the same mark simultaneously at each receiver.

5. Broadcast method according to claim 3, **characterized in that** it consists of stamping the data by marking at the reference receiver (202) and processing the stamped data corresponding to the same mark simultaneously at each receiver, including the reference receiver, (202, 203, 203',...).

6. Broadcast method according to any one of claims 1 to 5, **characterized in that** the initiation of the synchronous processing of stamped data at each broadcast element can be performed at a parameterizable future moment.

7. Broadcast method according to any one of claims 1 to 6, **characterized in that** said stream of data can be transmitted to the receivers before their future processing, and stored in a temporary memory.

8. System for the synchronized broadcast of data streams, comprising a transmission source (2) of a stream of processed data (1) in the form of signals (4), transmitted to at least two remote receivers (3, 3' ,...) for broadcasting said stream (1), said receivers (3, 3',...) each comprising at least one internal electronic clock (9), and said source (2) comprising a reference calendar clock (13) clocked by an internal electronic clock (12), wherein:
- each receiver (3, 3',...) comprises:
∘ a calendar clock (11) clocked by said internal electronic clock (9);
∘ means for adjusting the time of said calendar clock (11), by directly modifying its internal values;
∘ data processing devices (10) clocked by said internal electronic clock (9) or a dependent correlated electronic clock;
∘ means for adjusting said internal electronic clock (9) by modifying its frequency;
- said adjustment means adjusting said internal electronic clock (9) according to said reference calendar clock (13) of the source, in particular by estimating the time differences between each receiver (3, 3' ,...) on the one hand and said source (2) on the other hand, by exchanging and comparing between each receiver (3, 3' ,...) and said source (2) signals (14) timestamped by the calendar clock (11) of each receiver (3, 3',...) and the calendar clock (13) of the source (2), by increasing or reducing its frequency, with the aim of eliminating these time differences;
- said adjustment means adjusting said calendar clock (11) by direct modification where there is a difference greater than a predefined value between the times of the calendar clock (11) of each receiver (3, 3',...) and the calendar clock (13) of the source (2);
- said estimate of the time differences is corrected taking into account the estimate of the transit time between said source (2) and each receiver (3, 3',...) ; and
- said data are stamped at said source (2);
so as to make the calendar time of each receiver (3, 3',...) identical to the reference calendar time of the source (2), and therefore make the calendar times of all the receivers (3, 3' ,...) identical to one another, and to synchronize the processing and broadcasting at each receiver (3, 3' ,...) of said stamped data.

9. System for the synchronized broadcast of data streams, comprising a transmission source (102) of a stream of processed data (101) in the form of signals (104), transmitted to at least two remote receivers (103, 103',...) for broadcasting said stream (101), said receivers (103, 103',...) each comprising at least one internal electronic clock (109), and one of said receivers (103) constituting a reference, wherein:
- each receiver (103, 103',...) comprises:
∘ a calendar clock (111) clocked by said internal electronic clock (109);
∘ means for adjusting the time of said calendar clock (111), by directly modifying its internal values;
∘ data processing devices (110) clocked by said internal electronic clock (109) or a dependent correlated electronic clock;
- at least each non-reference receiver (103',...) comprises means for adjusting said internal electronic clock (109) by modifying its frequency,
- said adjustment means adjusting said internal electronic clock (109) according to the calendar clock of said reference receiver (103), in particular by estimating the time differences between each receiver (103',...) on the one hand and said reference receiver (103) on the other hand, by exchanging and comparing between each receiver (103' ,...) and said reference receiver (103) signals (114) timestamped by said calendar clocks (111) of the receivers, by increasing or reducing its frequency, with the aim of eliminating these time differences;
- said adjustment means adjusting said calendar clock (111) by direct modification where there is a difference greater than a predefined value between the times of the calendar clocks (111) of each receiver (103',...) and said reference receiver (103);
- said estimate of the time differences is corrected taking into account the estimate of the transit time between said reference receiver (103) and each receiver (103' ,...) ; and
- said data are stamped at said source (102);
so as to make the calendar time of each receiver (103',...) identical to the calendar time of the reference receiver (103), and therefore make the calendar times of all the receivers (103, 103',...) identical to one another, and to synchronize the processing and broadcasting at each receiver (103, 103',...) of said stamped data.

10. System for the synchronized broadcast of data streams, comprising a reference receiver (202) of a stream of data (201), which retransmits the stream received in the form of signals (204) to at least one remote receiver (203, 203' ,...) for broadcasting said stream (201), said receivers (202, 203, 203',...) each comprising at least one internal electronic clock (209), wherein:
- each receiver (202, 203, 203',...) comprises:
∘ a calendar clock (211) clocked by said internal electronic clock (209);
∘ means for adjusting the time of said calendar clock (211), by directly modifying its internal values;
∘ data processing devices (210) clocked by said internal electronic clock (209) or a dependent correlated electronic clock;
- at least each non-reference receiver (203, 203',...) comprises means for adjusting said internal electronic clock (209) by modifying its frequency,
- said adjustment means adjusting said internal electronic clock (209) according to the calendar clock of said reference receiver (202), in particular by estimating the time differences between each receiver (203, 203' ,...) on the one hand and said reference receiver (202) on the other hand, by exchanging and comparing between each receiver (203, 203' ,...) and said reference receiver (202) signals (212) timestamped by said calendar clocks (211), by increasing or reducing its frequency, with the aim of eliminating these time differences;
- said adjustment means adjusting said calendar clock (211) by direct modification where there is a difference greater than a predefined value between the times of the calendar clocks (211) of each receiver (203, 203' ,...) and said reference receiver (202);
- said estimate of the time differences is corrected taking into account the estimate of the transit time between said reference receiver (202) and each receiver (203, 203',...); and
- said data are stamped at said reference receiver (202);
so as to make the calendar time of each receiver (203, 203',...) identical to the calendar time of the reference receiver (202), and therefore make the calendar times of all the receivers (202, 203, 203',...) identical to one another, and to synchronize the processing and broadcasting at each receiver (202, 203, 203' ,...) of said stamped data.
